# EUROPEAN PATENT SPECIFICATION

(11) **EP 0 505 407 B1**
(45) Date of publication and mention of the grant of the patent: **22.07.1998**
(21) Application number: 91900459.8
(22) Date of filing: 27.11.1990
(51) Int. Cl.: H04J 3/24, H04B 1/00, H04Q 7/20

(54) **WIRELESS IN-BUILDING TELECOMMUNICATIONS SYSTEM FOR VOICE AND DATA COMMUNICATIONS**
DRAHTLOSES TELEKOMMUNIKATIONSSYSTEM INNERHALB EINES GEBÄUDES FÜR SPRACH- UND DATENKOMMUNIKATION
SYSTEME INTEGRE DE TELECOMMUNICATIONS SANS FIL POUR LA VOIX ET LES DONNEES DANS UN IMMEUBLE

(30) Priority: 29.11.1989 US 442886
(43) Date of publication of application: 30.09.1992
(73) Proprietor: MOTOROLA, INC., Schaumburg, IL 60196 (US)
(72) Inventor: BERKEN, James, J., Lombard, IL 60148 (US); FREEBURG, Thomas, A., Arlington Heights, IL 60004 (US); OGASAWARA, Roy, T., Chicago, IL 60630 (US); WHITE, Richard, E., Cary, IL 60013 (US); MITZLAFF, James, E., Arlington Heights, IL 60004 (US); BEDLEK, Gregory, J., Barrington, IL 60010 (US)
(74) Representative: Dunlop, Hugh Christopher
(86) International application number: US9006905
(87) International publication number: WO9108629

(56) References cited:
- US-A- 4 398 289
- US-A- 4 672 601
- US-A- 4 789 983
- US-A- 4 870 601
- COMMUTATION ET TRANSMISSION, vol.11, no.2, 1989, PARIS FR pages 39 - 50, XP32850 M. COUDREUSE ET AL. 'les systemes de radiocommunication mobile a ressources partagees TN10-TN100-TN200'

## Description

### Technical Field

This invention pertains to voice/data packet switches and, more particularly, to a wireless in-building telecommunications system for voice and data communications.

### Background of the Invention

Certain wireless communications systems have been known in the prior art. Voice and data switches are known in the prior art. Packet switching is also known. In the past, however, synchronization for the control of the devices sending and receiving information packets in a voice/data packet switch has been a problem. This problem has been related to the problem of dynamically allocating the packet bandwidth between the various peripheral devices attached to the switch for voice information and data information. Another related factor has been the architecture for the wireless switch. The architectures of past wireless switches had a problem of dynamically allocating bandwidth, thus resulting in the switch having a low switching capacity and throughput. In PBX's, it is because all data is switched byte-by-byte. In data packet switches, it is a processor horsepower issue. These performance problems become even more significant in the context of modern fast packet protocols. It would be desirable, therefore, to provide a wireless voice/data packet switch with an improved architecture.

Key to this wireless packet switch architecture is a method for allocating the required bandwidth to each of the users of the common communications path. Previous systems did not allocate the bandwidth on a need basis, but rather allocated the bandwidth at system start-up without allowance for dynamic changes in response to changing traffic needs.

For example, see Hewitt et al., U.S. Patent 4,642,806, issued 10/2/87, entitled "Communications Network having a Single Node and a Plurality of Outstations".

See, also, Eizenhoefer, U.S. Patent 4,754,453, issued 28/6/88, entitled "Digital Radio Transmission System with a Connection-Accompanying Organization Channel in the Time-Division Multiplex Frame".

See, also, Allan et al., U.S. Patent 4,759,017, issued 19/7/88, entitled "Telecommunications Exchange Allocating Variable Channel Bandwidth".

See, also, Calvignac et al., U.S. Patent 4,763,321, issued 9/8/88, entitled "Dynamic Bandwidth Allocation Mechanism Between Circuit Slots and Packet Bit Stream in a Communication Network".

US Patent 4,789,983, issued 13/6/91, discloses a wireless network for wideband indoor communications comprising a central node and a plurality of user modules which communicate with said central node via a shared RF communications channel.

### Summary of the Invention

It is an object of the present invention, therefore, to provide a wireless in-building telephone system for voice and data communications. It is a further object of the present invention to provide a method for allocating the required bandwidth to each of the users of the common communications path in such a communication system.

Accordingly, there is provided a wireless in-building telecommunications system for data communications comprising: a node; a plurality of user modules; said node having a plurality of node data interface devices coupled to respective digital information sources for coupling data signals to the respective digital information sources; said plurality of user modules having a plurality of user data interface devices coupled to respective digital information for coupling data signals to the respective digital information terminals; said node having a node packet switch coupled to said plurality of node data interface devices via a node bus, at least one of said node data interface devices being a radio which communicates with said plurality of user modules via a shared RF communications channel via a fast-packet switching mechanism, said mechanism being controlled by a bandwidth allocating scheme preventing collision between the various units, ie nodes and/or user modules, that may be accessing said communications channel; each of said plurality of user modules having a user packet switch coupled to said plurality of user data interface devices via a user bus, at least one of said user data interface devices being coupled via said user network interface bus to a radio which communicates with said node via said shared RF communications channel.

### Brief Description of the Drawings

Figs. 1A-1E form a system block diagram of the node and user module that depicts a first embodiment of a wireless in-building telecommunications system for voice and data communications, according to the invention.

Fig. 2 shows a frame for the first embodiment.

Fig. 3 shows the time slot arrangement within the frame.

Fig. 4 shows the contents within a time slot.

Fig. 5 shows a typical network topology for the first embodiment.

Fig. 6 shows several bandwidth allocation schemes for the first embodiment.

### Detailed Description of the Invention

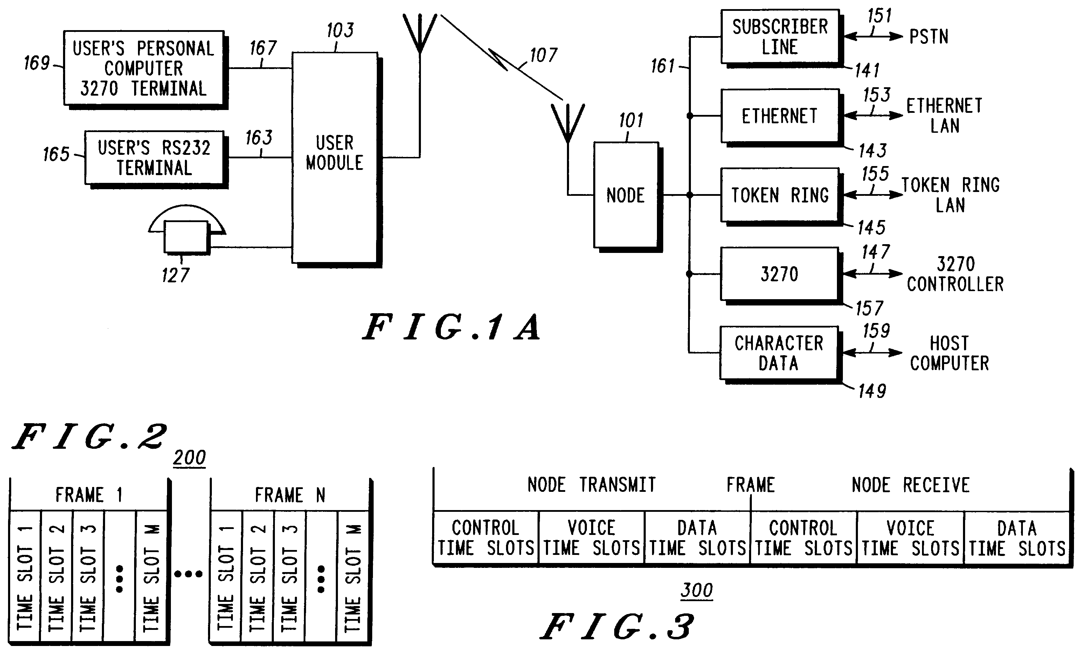

Figs. 1A - 1E form a block diagram depicting a first embodiment of a wireless in-building telecommunications system for voice and data communications, according to the invention.

Referring now to Fig. 1A, there is shown a node 101 and a user module (UM) 103. It will be appreciated by those skilled in the art that a multiplicity of UM's may be used. However, for simplicity, only one is shown in Fig. 1A.

Fig. 1B depicts the node 101 in greater detail.

Fig. 1C depicts the user module 103 in greater detail.

Returning now to Fig. 1A, it is seen the node 101 is connected to a multiplicity of interface units 141, 143, 145, 147, and 149 via fiber optic link 161. The interface unit 141 is a subscriber line interface unit arranged to couple to the PSTN 151. The interface unit 143 is an Ethernet interface unit arranged to couple to an Ethernet LAN 153. The interface unit 145 is a Token Ring interface unit arranged to couple to a Token Ring LAN 155. The interface unit 147 is a 3270 interface unit arranged to couple to a 3270 controller 157. The interface unit 149 is a character data interface unit arranged to couple to a host computer 159.

Fig. 1D depicts the subscriber line interface unit 141 in greater detail.

Fig. 1E depicts the Ethernet/Token Ring/3270/Character Data interface units 143, 145, 147, 149 in greater detail.

The following is a description of the processing of the voice signal from the PSTN 151 through the subscriber line interface unit, over the fiber 161 through the node 101, over the RF channel 107 through the user module 103 to the telephone 127.

Turning now to Fig. 1D, the voice input from the PSTN lines 151A, 151B is filtered, compressed, and digitized by the subscriber line interfaces 171, 173. The subscriber line interfaces 171, 173 form voice packets, which include voice samples and line status, that are sent to the packet switch 175 via the packet switch bus 177. The packet switch 175 will then place a modified voice packet on the packet switch bus 177 at the appropriate time to send the packet to the fiber interface 179 and therefore over the fiber 161.

The software contained in the processor memory 183 is executed by the control processor 181 to control all the functions of the subscriber line interface unit 141.

The human interface 185 provides an indication of the status of the device.

Turning now to Fig, 1B, the fiber interface 205 receives the voice packet from the fiber 161 at the appropriate time and sends it to the packet switch 111 via the packet switch bus 113. The packet switch 111 will then place a modified voice packet on the packet switch bus 113 at the appropriate time to send the voice packet to the radio 115 and therefore over the RF channel 107.

The software contained in the processor memory 121 is executed by the control processor 135 to control all the functions of the node 101.

The human interface 125 provides an indication of the status of the device.

Turning now to Fig. 1C, the radio 211 receives the voice packet from the RF channel 107 at the appropriate time and sends it to the packet switch 213 via the packet switch bus 207. The packet switch 213 will then place a modified voice packet on the packet switch bus 207 at the appropriate time to send the voice packet to the phone interface 209. The phone interface 209 will convert the packet from digital to analog, expand and filter the signal and send it to the telephone 127.

The software contained in the processor memory 217 is executed by the control processor 215 to control all the functions of the user module 103.

The human interface 219 provides an indication of the status of the device.

The processing of the voice signal from the telephone 127 to the PSTN 151 occurs in much the same manner except in the opposite direction.

Returning now to Fig. 1C, the phone interface 209 filters, compresses, and digitizes the voice input from the telephone 127. The phone interface 209 forms voice packets, which include voice samples and line status, that are sent to the packet switch 213 via the packet switch bus 207. The packet switch 213 will then place a modified voice packet on the packet switch bus 207 at the appropriate time to send the packet to the radio 211 and therefore over the RF channel 107.

Now returning to Fig, 1B, the radio 115 receives the voice packet from the RF channel 107 at the appropriate time and sends it to the packet switch 111 via the packet switch bus 113. The packet switch 111 will then place a modified voice packet on the packet switch bus 113 at the appropriate time to send the voice packet to the fiber interface 205 and therefore over the fiber 161.

Now returning to Fig. 1D, the fiber interface 179 receives the voices packet from the fiber 161 at the appropriate time and sends it to the packet switch 175 via the packet switch bus 177. The packet switch 175 will then place a modified voice packet on the packet switch bus 177 at the appropriate time to send the voice packet to the appropriate subscriber line interface 171,173. The subscriber line interface 171,173 will convert the packet from digital to analog, expand and filter the signal and send it to the PSTN line 151A, 151B.

Data is handled in much the same manner as voice. The following is a description of the processing of data through the system.

Turning now to Fig 1E, data is received from the Ethernet LAN 153, token ring LAN 155, 3270 controller 157 or the host computer 159 via the data interface 201. The data is sent to the control processor 195 via the processor bus 203. The control processor 195 will form packets and send them to the packet switch 193 via the processor bus 203. The packet switch 193 will then place the data packet on the packet switch bus 189 at the appropriated time to send the packet to the fiber interface 191 and therefore over the fiber 161.

The software contained in the processor memory 197 is executed by the control processor 195 to control all the functions of the Ethernet interface unit 143, token ring interface unit 145, 3270 interface unit 147, character data interface unit 149.

Returning to Fig, 1B, the fiber interface 205 receives the data packet from the fiber 161 at the appropriate time and sends it to the packet switch 111 via the packet switch bus 113. The packet switch 111 will then place a modified data packet on the packet switch bus 113 at the appropriate time to send the data packet to the radio 115 and therefore over the RF channel 107.

Returning to Fig. 1C, the radio 211 receives the data packet from the RF channel 107 at the appropriate time and sends it to the packet switch 213 via the packet switch bus 207. The packet switch 213 will then send the data packet to the control processor 215 via the processor bus 225. The control processor will then send the data packet to the appropriate interface, terminal interface 221 for character data or LAN/3270 interface 223 for Ethemet, token ring, and 3270. The terminal interface 221 places the data on the terminal port 163 and therefore to the terminal 165. The LAN/3270 interface 223 places the data on the LAN port 167 and therefore to the personal computer/ 3270 terminal 169.

The processing of data from the user's terminal 165, personal computer / 3270 terminal 169 to the appropriate data interface unit, 143, 145, 147, 149 is handled in the same manner except in the opposite direction.

Returning to Fig. 1C, the terminal interface 221 accepts data from the terminal 165 via the terminal port 163 or the LAN/3270 interface 223 accepts data from the user's personal computer / 3270 terminal 169 via the LAN port 167. The data is sent to the control processor 215 via the processor bus 225. The control processor 215 will form packets and send them to the packet switch 213 via the processor bus 225. The packet switch 213 will then place the data packet on the packet switch bus 207 at the appropriated time to send the packet to the radio 211 and therefore over the RF channel 107.

Returning to Fig, 1B, the radio 115 receives the data packet from the RF channel 107 at the appropriate time and sends it to the packet switch 111 via the packet switch bus 113. The packet switch 111 will then place a modified data packet on the packet switch bus 113 at the appropriate time to send the data packet to the fiber interface 205 and therefore over the fiber 161.

Returning to Fig. 1E, the fiber interface 191 receives the data packet from the fiber 161 at the appropriate time and sends it to the packet switch 193 via the packet switch bus 189. The packet switch 193 will then send the data packet to the control processor 195 via the processor bus 203. The control processor will then send the data packet to the data interface 201 via the processor bus 203. The data interface 201 places the data on the data port 153, 155, 157, or 159.

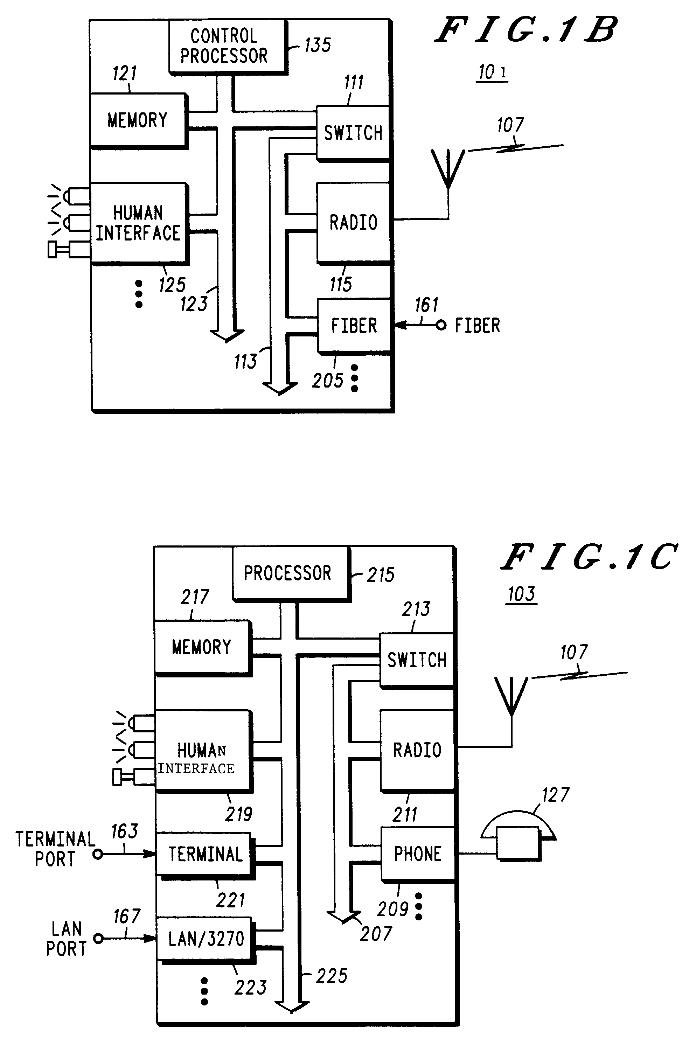

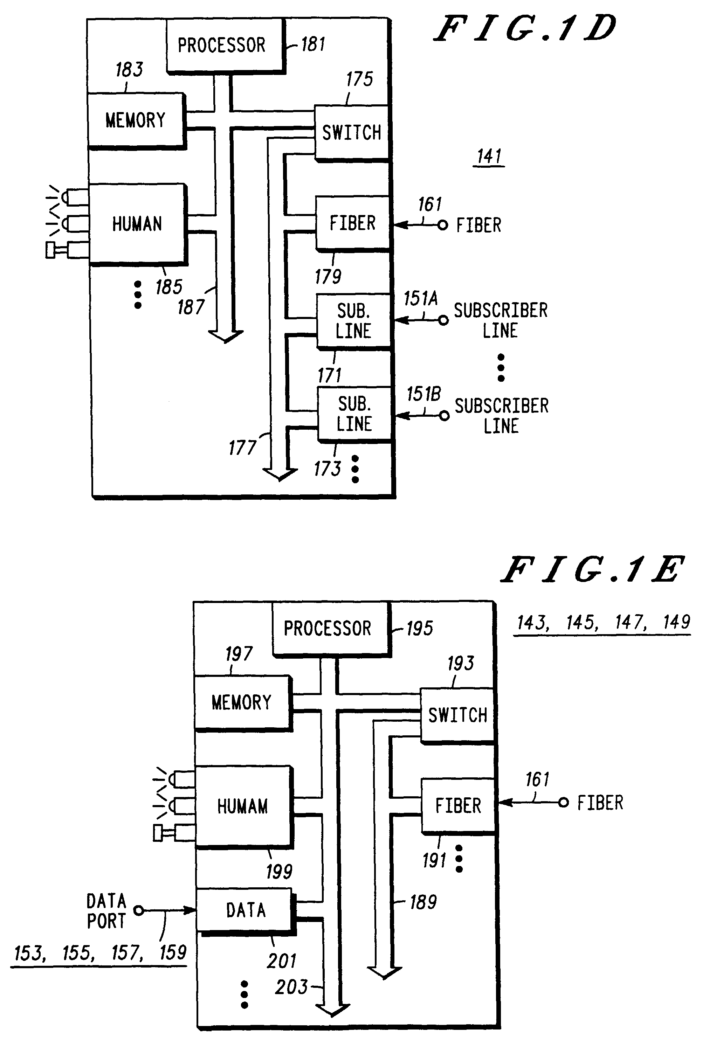

There will be a repetitive frame occurring periodically which contains system control, voice and data packets necessary for the correct operation of the system. The frame shown in Fig. 2 is made up of a fixed number of time slots. Fig. 3 shows how the time slots are divided into two basic groups; node transmit and node receive. Each of these two groups is further divided into three subgroups; control time slots, voice time slots, and data time slots.

Each time slot has the same basic format shown in Fig. 4. A time slot is divided into four parts: bus control, packet preamble, packet header, and packet information. The voice, data or system control is contained in the packet information portion.

This system allows for maximum spectral efficiency by allocating the required bandwidth to each of the users of the common communications path. As mentioned above, previous systems did not allocate the bandwidth on a need bases, but rather allocated the bandwidth at system start-up. As a result, this system takes advantage of the fast packet switching technology that allows both circuit and non-circuit connections to be made in the same system.

The control time slots are used for system control and bandwidth allocation. When a user module or interface unit requires voice or data bandwidth, it will use a predetermined control time slot to request bandwidth from the node. The node will allocate the bandwidth, if available, and notify the user module and interface unit of the bandwidth allocation via a predetermined control time slot. The user module and interface unit will use the bandwidth until it is no longer required. At that point, the user module and/or the interface unit will use a predetermined control time slot to send a de-allocation request to the node. The node will use a predetermined control time slot to acknowledge the de-allocation of the bandwidth to the user module and interface unit.

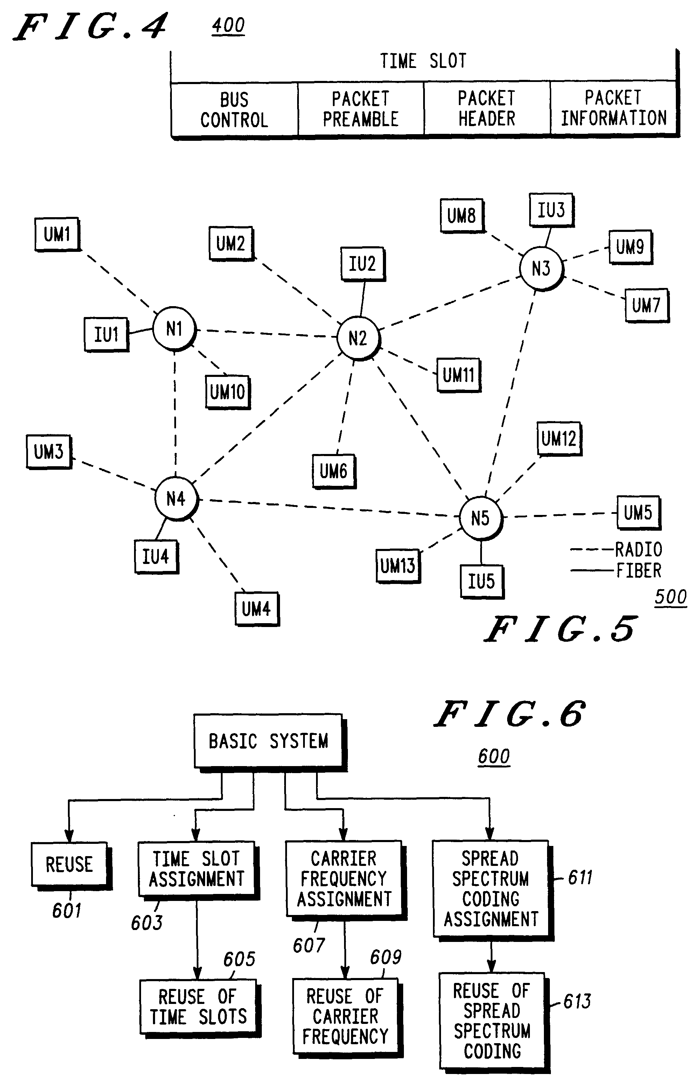

Fig. 5 shows a typical network topology 500 for the first embodiment. There is shown a multiplicity (n) of nodes, N₁ through Nₙ. There is also shown a multiplicity (n) of user modules UM₁ through UMₙ. The nodes communicating with each other and with the user modules on a shared communications path via a fast-packet-switched mechanism, the fast-packet-switched mechanism being controlled by a bandwidth allocation scheme preventing collision between the various units that may be accessing the common communications path.

Fig. 6 illustrates multiple approaches 600 that can be used for dividing (or allocating) the bandwidth for the system. These include:
- Reusing bandwidth allocation (601);
- Time slot assignment (603) and reuse of time slots (605);
- Carrier frequency assignment (607) and reuse of carrier frequencies (609);
- Spread spectrum coding assignments (611) and reuse of spread spectrum codings (613).

Reuse bandwidth allocation is described as follows:

As more bandwidth is required, the system can simply be replicated with sufficient separation so as not to interfere with another system.

Time slot assignment bandwidth allocation is described as follows:

In a fast packet communication system, the communications channel is divided into frames. Each of these frames is a given length in time. Each frame is broken into time slots. Each of these time slots contains a packet of information. This is shown in Fig. 2. All time slots are available for use by any node or module requesting bandwidth. This request can be for either voice or data information transfer.

Using a time division multiple access (TDMA) scheme, the frame is divided into sections (groups of time slots), one transmit and one receive for the nodes. The nodes use their allocated portion of the frame to communicate with user modules and other nodes. As a node's requirement for bandwidth changes, its portion of the frame will increase or decrease as required. This change of the frame (time slot) allocation requires coordination between all of the nodes.

When a request is made for voice information transfer, a time slot is allocated for the duration of the call - this is known as a "circuit switched path". When a request is made for data information transfer, a time slot is allocated for a single frame or group of frames -- this is known as a "packet switched path".

When a module requires bandwidth, a time slot or group of time slots is assigned to that module for its use. When the module no longer requires the allocated bandwidth, the time slots are "freed-up" and are available for use by the next module requesting bandwidth.

Reuse of time slots allocation is described as follows:

In the system shown in Fig. 5, time slots can be reused if a pair of devices (module-node or node-node) are located so that they do not interfere with another pair of devices using the same time slot in the same frame on the same communications channel.

Carrier frequency assignment bandwidth allocation is described as follows:

In the system shown in Fig. 5, as more bandwidth is required than a single carrier frequency can provide, node(s) and/or module(s) can use another carrier frequency for communications. All carrier frequencies have the same basic frame structure.

Reuse of carrier frequencies is described as follows:

A carrier frequency can be reused if it does not interfere with another group of node(s) or module(s) using the same carrier frequency.

Spread spectrum coding assignment bandwidth allocation is described as follows:

In the system shown in Fig. 5, as more bandwidth is required a different code (for direct sequence systems) or hoping sequences (for frequency hoping systems) can be used for communications between node(s) and/or module(s).

Reuse of spread spectrum codings is described as follows:

A code (for direct sequence systems) or hoping sequence (for frequency hoping systems) can be reused if it does not interfere with another group of node(s) - module(s) using the same code or hoping sequence.

While various embodiments of a wireless in-building telecommunications system for voice and data communications, according to the present invention, have been described hereinabove, the scope of the invention is defined by the following claims.

## Claims

1. A wireless in-building telecommunications system for data communications comprising:
a node (101);
a plurality of user modules (103);
said node having a plurality of node data interface devices (115, 205, 141-149) coupled to respective digital information sources (151-159) for coupling data signals to the respective digital information sources;
said plurality of user modules having a plurality of user data interface devices (221, 223) coupled to respective digital information terminals (165, 169) for coupling data signals to the respective digital information terminals;
said node having a node packet switch (111) coupled to said plurality of node data interface devices via a node bus (113, 161), at least one of said node data interface devices being a radio (115) which communicates with said plurality of user modules via a shared RF communications channel via a fast-packet switching mechanism, said mechanism being controlled by a bandwidth allocating scheme preventing collision between the various units, ie nodes and/or user modules, that may be accessing said communications channel;
each of said plurality of user modules having a user packet switch (213) coupled to said plurality of user data interface devices via a user bus (225, 207), at least one of said user data interface devices being coupled via said user bus (225, 207) to a radio (221) which communicates with said node via said shared RF communications channel.

2. The wireless in-building telecommunications system of Claim 1 wherein:
said node further has a voice interface device (141) coupled (151) to a public switched telephone network (PSTN) and coupled to the node packet switch (111) for coupling voice signals to the public switched telephone network (PSTN);
said plurality of user modules further have a voice interface device (209) coupled to a telephone instrument (127) for coupling voice signals to the telephone instrument;
said user packet switch (213) is further coupled to said voice interface device (209) via said user bus (225, 207).

3. The wireless in-building telecommunications system of Claim 1 or Claim 2 wherein said digital information sources are selected from the group consisting of: Ethernet local area networks and token ring local area networks.

4. The wireless in-building telecommunications system of Claim 1 or Claim 2 wherein said digital information sources comprise a computer.

5. The wireless in-building telecommunications system of Claim 1 or Claim 2 wherein said digital information terminals are selected from the group consisting of: personal computers, 3270 terminals and RS232 terminals.

## Patentansprüche

1. Drahtloses Telekommunikationssystem innerhalb eines Gebäudes für Datenkommunikation, umfassend:
- einen Knoten (101);
- eine Vielzahl von Benutzermodulen (103);
- wobei dieser Knoten eine Vielzahl von Knotendatenschnittstellengeräten (115, 205, 141 - 149) hat, die an entsprechenden digitale Informationsquellen (151-159) gekoppelt sind, zum Koppeln von Datensignalen zu den entsprechenden digitalen Informationsquellen;
- wobei diese Vielzahl von Benutzermodulen eine Vielzahl von Benutzerdatenschnittstellengeräten (221, 223) hat, die zu entsprechenden digitalen Informationsendgeräten (165, 169) gekoppelt sind, zum Koppeln von Datensignalen zu den entsprechenden digitalen Informationsendgeräten;
- wobei dieser Knoten eine Knotenpaketvermittlung (111) hat, die über einen Knotenbus (113, 161) zu dieser Vielzahl von Knotendatenschnittstellengeräten gekoppelt ist, wobei wenigstens eines dieser Knotendatenschnittstellengeräte ein Rundfunkgerät (115) ist, welches mit dieser Vielzahl von Benutzermodulen über einen geteilten RF-Kommunikationskanal über einen Schnellpaketvermittlungsmechanismus kommuniziert, wobei dieser Mechanismus durch ein Bandbreitenzuweisungsschema gesteuert wird, welches eine Kollision zwischen den verschiedenen Einheiten, d.h. Knoten und/oder Benutzermodulen, die auf diesen Kommunikationskanal zugreifen können, verhindert;
- wobei jedes dieser Vielzahl von Benutzermodulen eine Benutzerpaketvermittlung (213) hat, die über einen Benutzerbus (225, 207) zu dieser Vielzahl von Benutzerdatenschnittstellengeräten gekoppelt ist, wobei wenigstens eines dieser Benutzerdatenschnittstellengeräte über diesen Benutzernetzwerkschnittstellenbus (225, 207) zu einem Rundfunkgerät (221) gekoppelt ist, welches über diesen geteilten RF-Kommunikationskanal mit diesem Knoten kommuniziert.

2. Drahtloses Telekommunikationssystem innerhalb eines Gebäudes nach Anspruch 1, wobei:
- dieser Knoten weiterhin ein Sprachschnittstellengerät (141) hat, welches zu einem öffentlichen Telefonvermittlungsnetzwerk (PSTN) gekoppelt ist, und welches zu der Knotenpaketvermittlung (111) gekoppelt ist, zum Koppeln von Sprachsignalen zu dem öffentlichen Telefonvermittlungsnetzwerk (PSTN);
- diese Vielzahl von Benutzermodulen weiterhin ein Sprachschnittstellengerät (209) haben, welches zu einem Telefongerät (127) gekoppelt ist, zum Koppeln von Sprachsignalen zu dem Telefongerät;
- diese Benutzerpaketvermittlung (213) weiterhin zu diesem Sprachschnittstellengerät (209) über diesen Benutzerbus (225, 207) gekoppelt ist.

3. Drahtloses Telekommunikationssystem innerhalb eines Gebäudes nach Anspruch 1 oder Anspruch 2, wobei diese digitalen Informationsquellen aus einer Gruppe ausgewählt sind, bestehend aus: lokale Ethernet-Netzwerke und lokale Token-Ring-Netzwerke.

4. Drahtloses Telekommunikationssystem innerhalb eines Gebäudes nach Anspruch 1 oder Anspruch 2, wobei diese digitalen Informationsquellen einen Computer umfassen.

5. Drahtloses Telekommunikationssystem innerhalb eines Gebäudes nach Anspruch 1 oder Anspruch 2, wobei diese digitalen Informationsendgeräte aus einer Gruppe ausgewählt sind, bestehend aus: Personalcomputern, 3270-Endgeräten und RS232-Endgeräten.

## Revendications

1. Système de télécommunication sans fil dans un bâtiment pour des communications de données comprenant :
- un noeud (101);
- une pluralité de modules d'utilisateur (103);
ledit noeud possédant une pluralité de dispositifs d'interface de données de noeud (115, 205, 141 à 149) couplés à des sources respectives d'information numérique (151 à 159) pour le couplage des signaux de données aux sources respectives d'information numérique;
ladite pluralité de modules d'utilisateur possédant une pluralité de dispositifs d'interface de données d'utilisateur (221, 223) couplés à des terminaux respectifs d'information numérique (165, 169) pour le couplage des signaux de données aux terminaux respectifs d'information numérique;
ledit noeud possédant un commutateur par paquets de noeud (111) couplé à ladite pluralité de dispositifs d'interface de données de noeud via un bus de noeud (113, 161), au moins un desdits dispositifs d'interface de données de noeud étant un poste radio (115) communiquant avec ladite pluralité de modules d'utilisateur via un canal partagé de communication R.F. via un mécanisme de commutation rapide par paquets, ledit mécanisme étant commandé par un schéma d'allocation de largeur de bande empêchant une collision entre les diverses unités, c'est-à-dire des noeuds et/ou des modules d'utilisateur, pouvant accéder audit canal de communication;
chaque module de ladite pluralité de modules d'utilisateur possédant un commutateur par paquets d'utilisateur (213) couplé à ladite pluralité de dispositifs d'interface de données d'utilisateur via un bus d'utilisateur (225, 207), au moins un desdits dispositifs d'interface de données d'utilisateur étant couplé via ledit bus d'interface d'utilisateur (225, 207) à un poste radio (221) communiquant avec ledit noeud via ledit canal partagé de communication R.F.

2. Système de télécommunication sans fil dans un bâtiment selon la revendication 1, dans lequel :
- ledit noeud possède, de plus, un dispositif d'interface de voix (141) couplé (151) à un Réseau Téléphonique Public Commuté (PSTN) et couplé à un commutateur par paquets de noeud (111) pour le couplage des signaux de voix au Réseau Téléphonique Public Commuté (PSTN);
- ladite pluralité de modules d'utilisateur possède, de plus, un dispositif d'interface de voix (209) couplé à un poste téléphonique (127) pour le couplage des signaux de voix avec le poste de téléphone;
- ledit commutateur par paquets d'utilisateur (213) est couplé, de plus, audit dispositif d'interface de voix (209) via ledit bus d'utilisateur (225, 207).

3. Système de télécommunication sans fil dans un bâtiment selon la revendication 1 ou 2, dans lequel lesdites sources d'information numérique sont sélectionnées à partir du groupe comprenant les réseaux locaux Ethernet et les réseaux locaux à jeton circulant.

4. Système de télécommunication sans fil dans un bâtiment selon la revendication 1 ou 2, dans lequel lesdites sources d'information numérique comprennent un ordinateur.

5. Système de télécommunication sans fil dans un bâtiment selon la revendication 1 ou 2, dans lequel lesdits terminaux d'information numérique sont sélectionnés dans le groupe comprenant : les ordinateurs personnels, les terminaux 3270 et les terminaux RS232.
